# DEMANDE DE BREVET EUROPEEN

(11) **EP 1 491 392 A1**
(43) Date de publication de la demande: **29.12.2004**
(21) Numéro de dépôt: 04291554.6
(22) Date de dépôt: 18.06.2004
(51) Int. Cl.: B60N 2/44, B60N 2/46, B60N 2/48

(54) **Systeme de reglage continu de position**

(30) Priorité: 18.06.2003 FR 0307363
(71) Demandeur: Centre d'Etude et de Recherche pour l'Automobile ( CERA), 51100 Reims (FR)
(72) Inventeur: Albacete, Joan Manel, 17458 Fornells de la Selva Girona (ES); Velasco Alfaro, Jose, 17458 Fornells de la Selva Girona (ES)
(74) Mandataire: Geismar, Thierry

(57) **Abrégé**

L'invention concerne un système de réglage (1) entre deux positions extrêmes de la position angulaire relative de deux composants de siège de véhicule automobile, comprenant :
- une couronne périphérique (2) destinée à être solidaire d'un composant, ladite couronne étant pourvue d'une paroi interne (2a) ;
- un ensemble (37) destiné à être solidaire de l'autre composant, comprenant au moins un corps roulant (4) disposé en rotation contre la paroi interne (2a) au moyen d'une pièce de positionnement (5), et une pièce de blocage (3) disposée à l'intérieur de la couronne (2), ladite pièce de blocage étant pourvue d'au moins une rampe (3a) en regard de laquelle au moins un corps roulant (4) est positionné ; et
- un dispositif de déplacement (10) réversible en rotation relative des pièces de positionnement (5) et de blocage (3) entre des positions active et inactive.

## Description

L'invention concerne un système de réglage entre deux positions extrêmes de la position angulaire relative d'un composant de siège de véhicule automobile, tel qu'un accoudoir, un appui tête ou un dossier, par rapport à un autre composant du siège, tel qu'un support du premier composant, à savoir un dossier ou une armature d'appui-tête par exemple.

Il existe diverses façons de réaliser de tels systèmes de réglage, notamment par des mécanismes à cliquet. De telles réalisations sont complexes à industrialiser. En outre, elles ne permettent qu'un réglage par crans, donc discontinu et non susceptible d'être ajusté finement par l'utilisateur en fonction des exigences de confort et de sécurité.

L'invention vise à perfectionner les systèmes de réglage connus en proposant notamment de réaliser le réglage angulaire d'un composant de siège automobile par rapport à son support par le biais d'un système de réglage simple, permettant un blocage inactivable de la rotation du composant dans un premier sens prédéterminé et une rotation libre dans le sens opposé, ou deuxième sens.

En outre le système permet un réglage continu de la position angulaire du composant par rapport à son support entre deux positions extrêmes, et ce de manière particulièrement simple et fiable.

A cet effet, l'invention concerne un système de réglage entre deux positions extrêmes de la position angulaire relative de deux composants de siège de véhicule automobile, comprenant :
- une couronne périphérique destinée à être solidaire d'un composant, ladite couronne étant pourvue d'une paroi interne ;
- un ensemble destiné à être solidaire de l'autre composant, comprenant au moins un corps roulant disposé en rotation contre la paroi interne au moyen d'une pièce de positionnement, et une pièce de blocage disposée à l'intérieur de la couronne, ladite pièce de blocage étant pourvue d'au moins une rampe en regard de laquelle au moins un corps roulant est positionné, lesdites pièces de blocage et de positionnement étant associées de façon déplaçable en rotation relativement l'une par rapport à l'autre entre une position active dans laquelle les corps roulants sont positionnés en contact avec la rampe de sorte à permettre la rotation relative de la couronne et de l'ensemble dans un sens mais pas dans l'autre, et une position inactive dans laquelle les corps roulants sont positionnés à distance de la rampe de sorte à permettre la libre rotation relative de la couronne et de l'ensemble dans les deux sens ; et
- un dispositif de déplacement réversible en rotation relative des pièces de positionnement et de blocage entre les positions active et inactive.

D'autres particularités et avantages de l'invention apparaîtront dans la description qui suit, faite en référence aux dessins annexés, dans lesquels :
- la figure 1 représente une vue éclatée d'un système de réglage selon un mode de réalisation de l'invention ;
- les figures 2 représentent en vue axiale le système de la figure 1 illustrant de façon schématique la manière dont se fait le blocage dans un sens de rotation (figure 2a) et la rotation libre dans le sens opposé (figure 2b) ;
- les figures 3 représentent schématiquement en vue de dessous le système de la figure 1 montrant le dispositif de déplacement en rotation qui est actionné par mise en position angulaire extrême du composant. Les figures 3a et 3b présentent une vue axiale du dispositif de déplacement (inscrit dans un petit cercle), dans son environnement (figuré en transparence hors du petit cercle), en position respectivement inactive et active. La figure 3c présente une vue en perspective partielle du dispositif de déplacement ;
- les figures 4 représentent l'incorporation d'un système de réglage selon un deuxième mode de réalisation, dans un appui tête, afin de permettre son réglage en rotation, le dispositif de déplacement étant respectivement en position inactive (figure 4a) et en position active (figure 4b) ;
- les figures 5 représentent schématiquement un troisième mode de réalisation du dispositif de déplacement du système de réglage, ledit dispositif comprenant un moyen d'actionnement manuel, respectivement en positon inactive (figure 5a et figure 5c qui est une vue partielle de coté de la figure 5a) et en position active (figure 5b).
- la figure 6 représente l'incorporation d'un système de réglage selon un autre mode de réalisation, dans un accoudoir, afin de permettre son réglage en rotation.
- la figure 7 est une représentation schématique en coupe d'un système de réglage selon un autre mode de réalisation comprenant six corps roulants, ledit système étant intégré dans un accoudoir représenté partiellement.
- les figures 8 sont des représentations schématiques en coupe du système de réglage intégré dans un accoudoir représenté partiellement, le système comprenant un dispositif de blocage en position haute de l'accoudoir, l'accoudoir étant représenté en position basse (figure 8a) et en position haute (figure 8b).

On décrit à présent un mode de réalisation d'un système de réglage, par exemple agencé pour le réglage en position angulaire d'un accoudoir.

Le système de réglage 1 est installé entre l'accoudoir d'un siège de véhicule automobile et le dossier de ce siège.

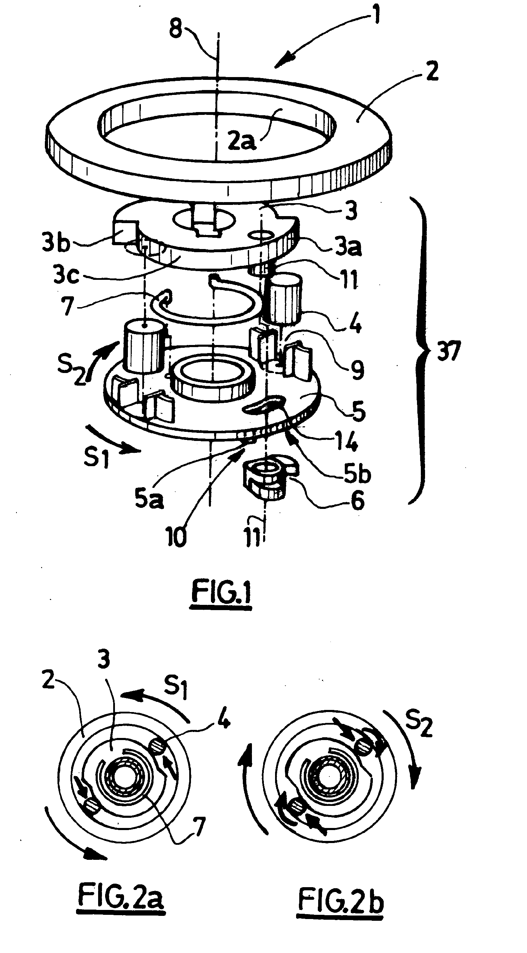

En référence à la figure 1, le système de réglage 1, destiné à permettre le réglage angulaire du composant par rapport au support entre deux positions extrêmes, comprend une couronne périphérique 2 de forme circulaire. La couronne 2 est solidaire de l'armature de l'accoudoir. La couronne périphérique 2 comprend une paroi interne 2a.

Un ensemble 37 destiné à être solidaire du composant formant support comprend une pièce de blocage 3, coaxiale avec la couronne 2, d'axe de rotation 8, et solidaire du support, prévue de manière à pouvoir être logée au sein de la couronne 2.

La pièce de blocage 3 comprend au moins une rampe 3a s'étendant à partir d'un décrochement 3b et disposée en regard de la paroi interne 2a de la couronne périphérique 2.

L'ensemble 37 comprend en outre au moins un corps roulant 4 de forme cylindrique. Dans le mode de réalisation représenté à la figure 1, l'ensemble 37 comprend deux corps roulants 4 disposés de part et d'autre de la pièce de blocage 3 et la pièce de blocage comprend deux rampes 3a s'étendant respectivement à partir de deux décrochements 3b.

Ces corps roulants 4 sont prévus pour être disposés en rotation entre la paroi interne 2a de la couronne 2 et une rampe 3a. A proximité du décrochement 3b, la distance radiale d entre la rampe 3a et la paroi 2a est légèrement supérieure au diamètre D du corps roulant 4, ladite distance d décroissant progressivement jusqu'à un point 3c où elle devient égale à D.

L'ensemble 37 comprend en outre une pièce de positionnement 5. Chaque corps roulant 4 est emboîté de manière rotative à l'une de ses extrémités dans un logement 9 prévu à cet effet dans la pièce de positionnement 5 destinée à assurer le positionnement de chaque corps roulant 4 en tangence à la fois avec la paroi 2a et avec la rampe 3a correspondante.

La pièce de blocage 3 et la pièce de positionnement 5 sont associées de façon déplaçable en rotation relativement l'une par rapport à l'autre entre une position active, dans laquelle la rotation du composant est possible dans un sens uniquement et une position inactive, dans laquelle la rotation du composant est possible dans les deux sens.

La position active est la position dans laquelle les corps roulants 4 sont positionnés de manière rotative en contact avec la rampe 3a et avec la paroi interne 2a de la couronne 2 de sorte à permettre la rotation relative de la couronne 2 et de l'ensemble destiné à être solidaire du support dans un sens mais pas dans l'autre.

La position inactive est la position dans laquelle les corps roulants sont positionnés à distance de la rampe 3a de sorte à permettre la libre rotation relative de la couronne 2 et de l'ensemble 37.

A cet effet, le système de réglage comprend un dispositif de déplacement réversible 10 en rotation relative des pièces de positionnement 5 et de blocage 3 entre les positions active et inactive. Ce dispositif comprend un moyen de contrainte élastique 7 de la rotation relative des pièces de positionnement 5 et de blocage 3.

Le positionnement des corps roulants 4 est assuré par le moyen de contrainte élastique 7, tel qu'un ressort de torsion, dont une extrémité est solidaire de la pièce de positionnement 5 et l'autre extrémité solidaire de la pièce de blocage 3. Le ressort 7 est monté en contrainte de manière à assurer, par détente élastique, un couple de torsion propre à permettre le positionnement en position active du système, dans laquelle les corps roulants 4 sont en tangence à la fois avec la paroi interne 2a et avec la rampe 3a, ceci par rappel de la pièce de positionnement 5 selon un premier sens S1 par rapport à la pièce de blocage 3.

Comme représenté schématiquement en figure 2, une telle réalisation garantit le positionnement des corps roulants 4 en tangence à la fois avec la couronne 2 et avec la pièce de blocage 3. Une rotation de la couronne 2, donc du composant qui en est solidaire, dans un deuxième sens S2 (figure 2b), opposé à S1, a pour effet de décaler très légèrement, par frottement entre la paroi 2a et les corps roulants 4 rotatifs, lesdits corps hors de leur position active de blocage, et la rotation est alors libre dans ce sens S2. En revanche, une amorce de rotation de la couronne 2 dans le sens inverse S1 (figure 2a) induit un blocage immédiat de la rotation, par coincement des corps roulants 4 entre la paroi 2a et les rampes 3a.

Une telle réalisation permet, par exemple, d'opérer le réglage très aisé d'un accoudoir entre une première position angulaire extrême (position haute de butée) et une deuxième position angulaire extrême (position basse de butée).

Ainsi, depuis une position basse où il se trouve initialement, correspondant à une orientation sensiblement horizontale, l'accoudoir peut être amené à une position de confort par rotation de l'accoudoir vers le haut (couronne 2 en rotation dans le sens S2) jusqu'à la position souhaitée, et ceci par simple traction et sans actionnement d'un bouton ou d'une manette.

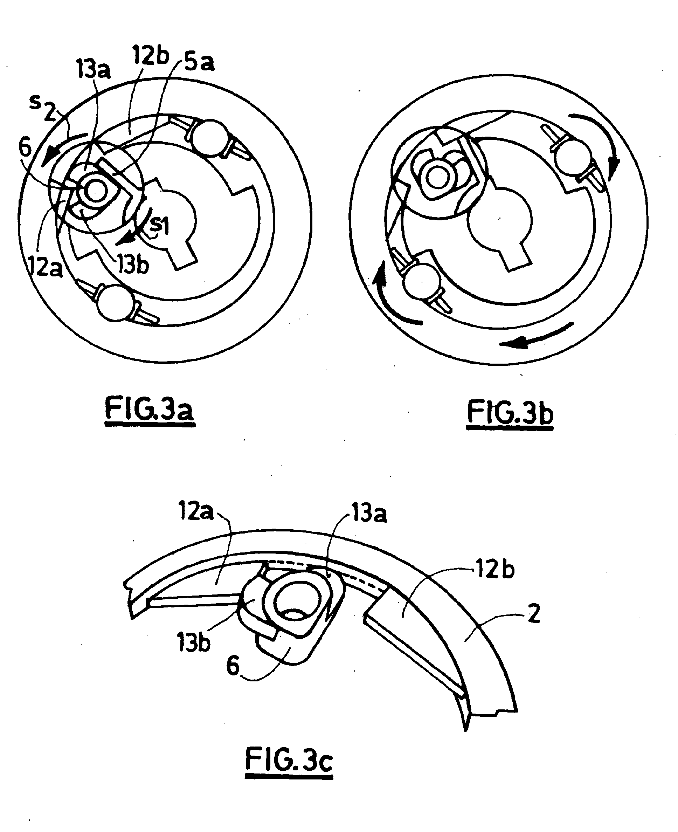

Dans le mode de réalisation représenté en figures 1 et 3, il est prévu que la rotation de la couronne 2 dans le sens S1 soit rendue possible par positionnement du système en position inactive par l'intermédiaire du dispositif de déplacement 10 comprenant un organe d'actionnement 6. L'organe 6 est formé d'une came montée en rotation autour d'un axe 11 en périphérie de la pièce de blocage 3 et contre un muret 5a prévu sur la face externe de la pièce de positionnement 5. L'organe d'actionnement 6 comprend deux saillies 13a, 13b. L'axe 11 est parallèle à l'axe 8 de rotation relative des composants.

L'actionnement de cet organe 6 est décrit ci-après en référence aux figures 1 et 3. Lorsque l'accoudoir arrive dans une première position angulaire extrême, en position haute de butée, par exemple en position sensiblement verticale, un premier ergot 12a, solidaire de la paroi interne 2a de la couronne 2, entre en contact avec une saillie 13a intégrée à l'organe d'actionnement 6. Le premier ergot 12a actionne alors en rotation dans un premier sens s1 ledit organe d'actionnement qui, par le biais de la saillie 13a, exerce une poussée sur le muret 5a intégrée radialement sur la face externe 5b de la pièce de positionnement 5. Ceci a pour effet d'écarter le muret 5a de l'axe 11 et d'induire une légère rotation relative de la pièce de positionnement 5 par rapport à la pièce de blocage dans le sens S2. Il en résulte un déplacement des corps roulant 4 à distance de la rampe, ce qui correspond à la position inactive. L'axe 11 traverse un logement oblong 14 prévu dans la pièce de positionnement 5, permettant le débattement angulaire relatif entre la pièce de positionnement 5 et la pièce de blocage 3.

L'organe d'actionnement 6 reste bloqué dans cette position correspondant à la position inactive des corps roulants 4 (figure 3b) et donc à la position active de l'organe 6, dans laquelle la saillie 13a est en tangence avec le muret 5a. A partir de cette position, le positionnement de l'accoudoir dans une deuxième position extrême, en position basse de butée, un deuxième ergot 12b, disposé sur la paroi interne 2a de la couronne 2 entre en contact avec une saillie 13b prévue sur l'organe d'actionnement 6 et induit une rotation dudit organe dans un deuxième sens s2, permettant son retour à son positionnement d'origine inactif (figure 3a) où le muret 5a n'est plus en tangence avec la saillie 13a. Les corps roulants 4 adoptent alors à nouveau leur position active permettant un blocage de la rotation de l'accoudoir dans le sens S1.

D'autres modes de mise en position inactive du système de réglage 1 peuvent être envisagés, notamment au moyen d'un bouton ou d'une manette actionnés manuellement. L'actionnement du bouton induit une légère rotation de la pièce de positionnement 5 par rapport à la pièce de blocage 3, la rotation permettant le positionnement des corps roulants 4 en position inactive. Ce type de réalisation permet de réaliser une rotation du composant dans le sens S1 à partir de toute position angulaire, et non seulement à partir d'une première position angulaire extrême.

Il peut être prévu un ou plusieurs corps roulants 4, sous réserve de disposer d'une pièce de blocage 3 appropriée, ceci en fonction des performances de blocage attendues.

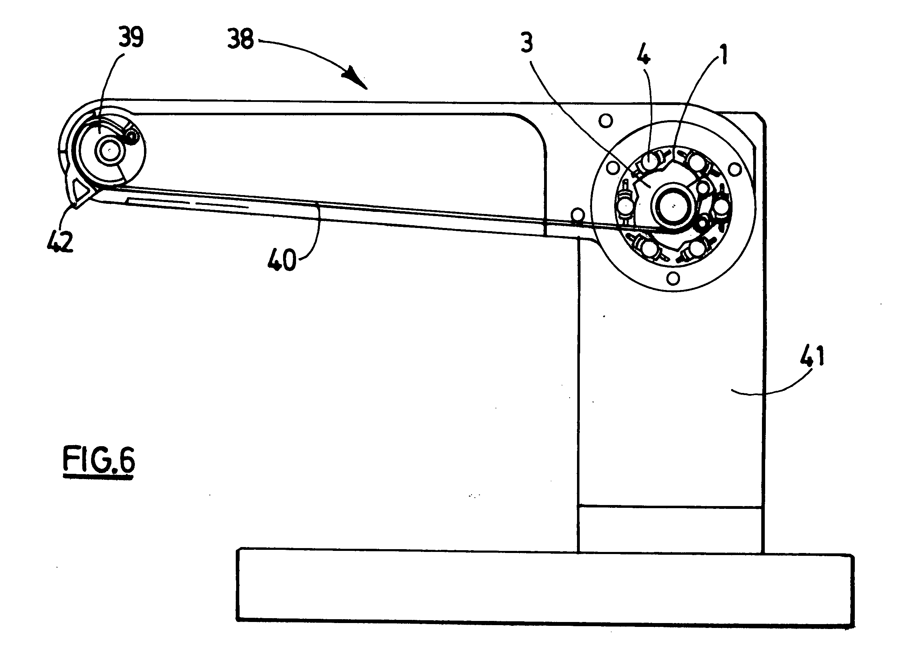

Selon le mode de réalisation représenté sur la figure 6, on prévoit un système de réglage 1 comprenant six corps roulants 4, la pièce de blocage 3 étant adaptée en conséquence. Le système de réglage 1 est agencé entre un accoudoir 38 et son support 41, qui est par exemple un dossier de siège ou une base solidaire du plancher du véhicule.

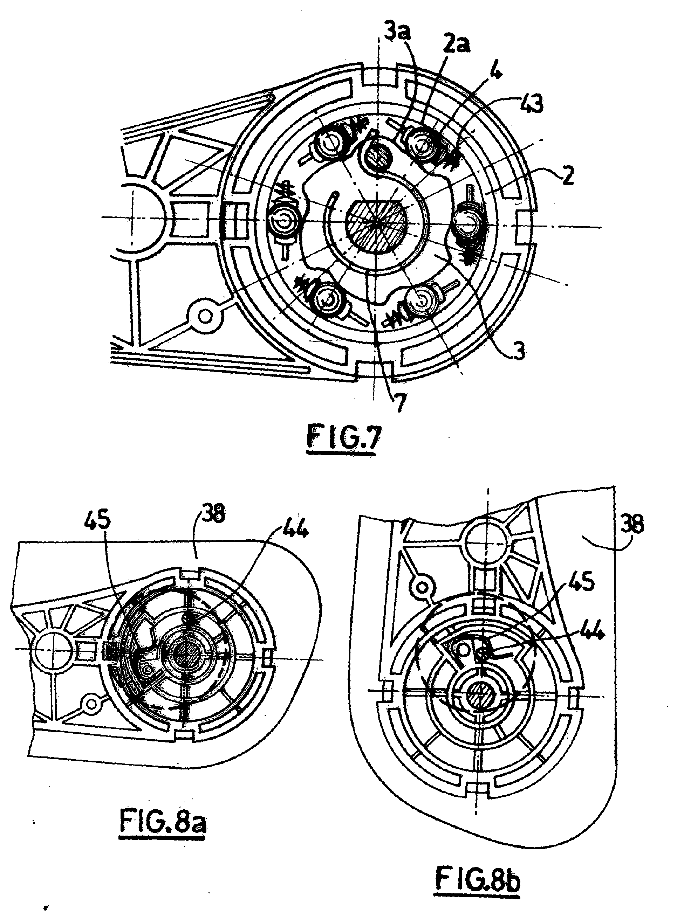

Selon une réalisation représentée sur la figure 7 dans laquelle le système de réglage comprend également six corps roulants 4, des ressorts 43 peuvent être solidarisés aux corps roulants 4, notamment autour des logements 9 de sorte à garantir de façon supplémentaire le positionnement des corps roulants 4. Les ressorts 43 permettent de pousser les corps roulants 4 contre la paroi interne 2a et la rampe 3a en position active du système 1.

Un bouton de commande 39 permet de faire passer le système de sa position active à sa position inactive et inversement. Ce bouton est agencé à la partie extrême de l'accoudoir 38 qui n'est pas fixée au support 41. Un câble 40 relie le bouton 39 au système de réglage 1, plus particulièrement à la pièce de positionnement 5.

Ce câble est agencé pour qu'une rotation du bouton de commande 39 entraîne une tension du câble 40, ce qui provoque une légère rotation de la pièce de positionnement 5 par rapport à la pièce de blocage 3, la rotation permettant le positionnement des corps roulants 4 en position inactive. La rotation du bouton de commande 39 est par exemple déclenchée au moyen d'une gâchette 42 faisant saillie hors de l'accoudoir.

En outre le bouton de commande 39 peut être activé en rotation dans le sens inverse du sens de déverrouillage. Ainsi, lorsqu'on lève l'accoudoir, le câble 40 s'enroule autour de la pièce de blocage 5 sans provoquer son déplacement. Ceci assure que seul un déclenchement manuel, par l'intermédiaire de la gâchette 42, peut provoquer le passage en position inactive du système de réglage.

Selon un autre mode de réalisation, non représenté, un bouton provoquant la rotation de la pièce de positionnement 5 par rapport à la pièce de blocage 3 peut être agencé directement autour de l'axe 8 du système de réglage. Un tel bouton serait donc enclenché au niveau de la fixation de l'accoudoir 38 sur son support 41 et permettrait le passage en position inactive du système de réglage 1.

Selon une réalisation représentée sur les figures 8, on peut prévoir un dispositif de blocage en position haute de l'accoudoir 38. Un tel dispositif comprend un ergot 44, par exemple solidaire de la pièce de blocage 3, elle-même solidaire du support 41 de l'accoudoir, et une lame ressort 45, par exemple solidaire de la couronne 2, elle-même solidaire de l'accoudoir 38. La géométrie de la lame ressort 45 est agencée pour permettre la réception de l'ergot 44 derrière un décrochement de la lame. Lors de la rotation de l'accoudoir 38 pour le faire passer d'une position d'utilisation, par exemple sensiblement horizontale (figure 8a), à sa position haute de rangement, la lame ressort 45 accompagne la rotation et son décrochement passe derrière l'ergot 44 de sorte à bloquer l'accoudoir dans la position haute. L'élasticité de la lame ressort 45 permet de débloquer l'accoudoir de sa position haute en exerçant une force suffisante lors de la rotation de l'accoudoir.

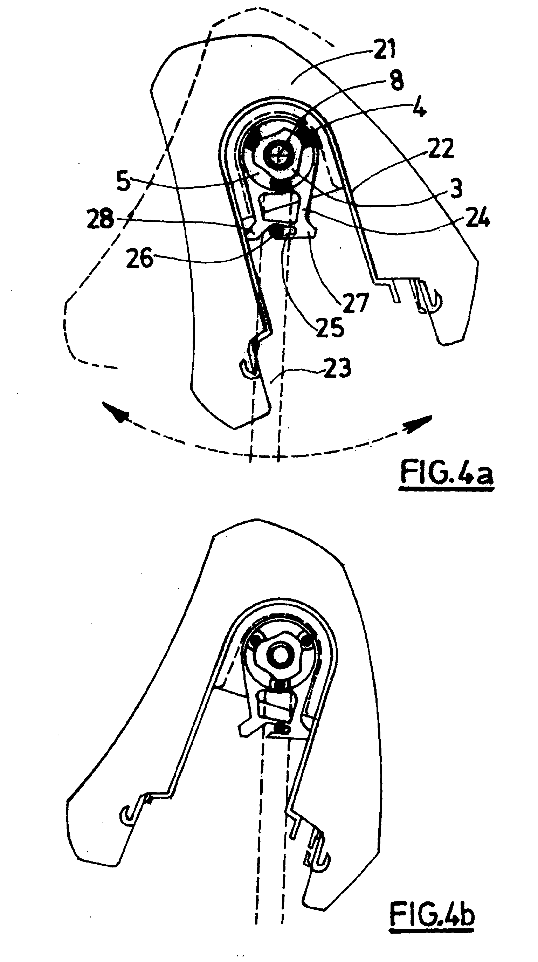

On décrit à présent un mode de réalisation d'un système de réglage agencé pour permettre le réglage de la position angulaire d'un appui tête (premier composant) par rapport à son armature (deuxième composant), décrit en relation avec la figure 4. Dans ce système, la couronne 2 est solidaire du coussin et l'ensemble 37 est solidaire de l'armature de l'appui-tête.

Selon ce mode de réalisation, l'appui tête comprend un coussin 21 solidaire d'un insert rigide creux 22 monté pivotant sur un support, formé d'une armature métallique 23 en forme de U renversé, autour d'un axe 8, ladite armature étant destinée à être engagée dans la partie supérieure d'un dossier de siège automobile.

La rotation de l'appui tête est assurée par un système de réglage 1 tel que décrit précédemment (la figure 4 présente un tel système 1 pourvu de trois corps roulants 4), comprenant une couronne périphérique solidaire de l'insert 22, des corps roulants 4, une pièce de blocage 3 solidaire de l'armature 23 et une pièce de positionnement 5 des corps roulants. La pièce de positionnement 5 est raccordée à ladite pièce de blocage 3 par l'intermédiaire d'un moyen de contrainte élastique non représenté. Le système est en outre pourvu d'un dispositif de déplacement 10 spécifique.

Dans ce mode de réalisation, le dispositif de déplacement 10 comprend une excroissance radiale 24 solidaire de la pièce de positionnement 5. Cette excroissance comprend, dans sa partie extrême, un moyen d'ancrage 25 temporaire sous forme de clip. Ledit moyen d'ancrage est apte à être rendu temporairement solidaire d'un ergot 26 solidaire de l'armature 23 lorsque l'appui-tête est dans une première position angulaire extrême.

A partir d'un positionnement de l'appui tête en arrière (figure 4a), l'utilisateur peut effectuer un réglage par rotation de l'appui tête vers l'avant, ceci par simple traction. Le système de réglage 1 empêche tout retour en arrière de l'appui tête par poussée de la tête du passager, notamment en cas d'accident, ce qui permet d'assurer une sécurité du passager en regard du « coup du lapin ».

Selon la réalisation représentée, le réglage de l'appui tête dans sa première position angulaire extrême, c'est à dire en position avant extrême (figure 4b) induit un enclenchement de l'ergot 26 dans le clip 25 du fait de la poussée exercée par la paroi interne de l'insert 22 sur une saillie 27 prévue sur l'excroissance 24. Il en résulte un positionnement du système en position inactive qui se traduit par un léger décalage angulaire entre les pièces de positionnement 5 et de blocage 3 par rapport à la position active des corps roulants 4. De ce fait la rotation est rendue possible pour ramener l'appui tête librement vers l'arrière.

Lorsque l'appui tête est ramené dans sa position extrême de réglage arrière (deuxième position angulaire extrême représentée figure 4a), la face interne de l'insert 22 exerce une poussée sur une saillie 28 prévue sur l'excroissance 24, avec pour effet de provoquer le déclipage du clip 25 hors de l'ergot 26. Il en résulte que le système 1 se trouve à nouveau en position active et peut exercer sa fonction de blocage de la rotation vers l'arrière de l'appui tête, tout en laissant libre la rotation vers l'avant.

Il peut être prévu, dans les réalisations où le dispositif de déplacement 10 est activé par positionnement du composant dans une première position angulaire extrême, un moyen de contrainte, tel un ressort, qui oblige l'utilisateur à exercer une force additionnelle pour positionner ledit composant dans ladite première position angulaire, ceci afin de satisfaire aux exigences de sécurité qui requièrent une action volontaire de l'utilisateur pour activer ledit dispositif de déplacement.

Dans un autre mode de réalisation, le positionnement en position inactive du système de réglage peut être réalisé au moyen d'un dispositif de déplacement 10 comprenant un moyen d'actionnement manuel 31 du type bouton ou manette. Une telle réalisation permet de désactiver le blocage de la rotation dans le sens S1 à partir d'une quelconque position angulaire de réglage de l'appui tête.

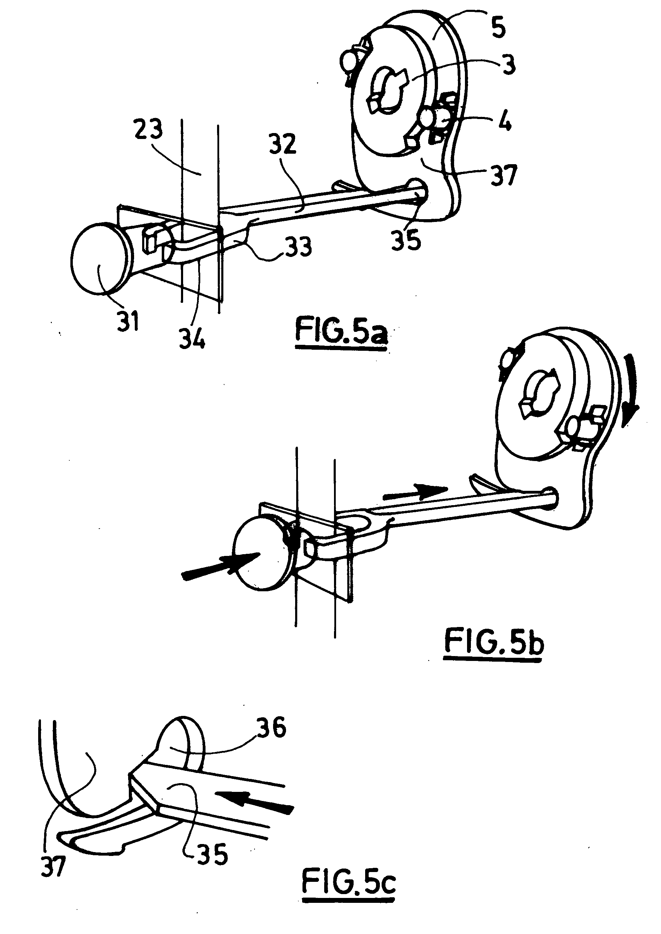

En référence à la figure 5, on décrit un dispositif de déplacement 10 particulier d'un système de réglage 1 appliqué au réglage d'un appui tête. Le principe mis en jeu consiste toujours à induire une légère rotation relative entre les pièces de blocage 3 et de positionnement 5, à l'encontre du couple de rappel exercé par le moyen de contrainte angulaire élastique 7 disposé entre ladite pièce de blocage et ladite pièce de positionnement, de manière à écarter les corps roulants 4 de leur position active de blocage.

La réalisation représentée sur les figure 5 (détaillée en figure 5c) prévoit un dispositif de déplacement 10 comprenant un moyen d'actionnement manuel 31 sous la forme d'un bouton disposé sur le côté de l'appui tête et un organe de transmission d'effort 32 s'étendant entre le moyen d'actionnement 31 et une surface de came de la pièce de positionnement 5.

Le moyen d'actionnement 31 est en contact avec l'organe de transmission d'effort 32 dont une extrémité 33 en forme de C entoure partiellement une branche 34 de l'armature 23 destinée à être engagée dans le dossier du siège. L'autre extrémité de l'organe de transmission 32 présente un prolongement biseauté 35 formant rampe apte à coopérer avec une surface de came de la pièce de positionnement 5. Ladite surface de came se présente sous la forme d'une fenêtre 36 ménagée dans une excroissance 37 prévue solidaire de la pièce de positionnement 5. Le prolongement 35 s'engage de façon mobile dans la fenêtre 36 lors de l'enfoncement du moyen d'actionnement. Le prolongement 35 coopère avec la fenêtre 36 de sorte à, lorsqu'il subit une translation en direction de ladite fenêtre (figure 5b) sous l'effet d'une poussée exercée sur le bouton 31, induire une légère rotation de la pièce 5 par rapport à la pièce de blocage 3 afin de déplacer les corps roulants 4 hors de leur position active et de permettre la libre rotation de l'appui tête dans les deux sens.

Les dispositifs de déplacement décrits dans le cas d'un appui tête peuvent être transposés aux accoudoirs et vice versa.

De même, tous les principes exposés précédemment peuvent être transposés à d'autres réglages intervenant dans un siège automobile, comme par exemple le réglage en inclinaison d'un dossier par rapport à une assise.

Dans tous les modes de réalisation présentés, il peut être prévu des moyens de friction, non représentés, aptes à éviter une rotation trop aisée du composant par rapport au support.

## Revendications

1. Système de réglage entre deux positions extrêmes de la position angulaire relative de deux composants de siège de véhicule automobile, comprenant :
- une couronne périphérique (2) destinée à être solidaire d'un composant, ladite couronne étant pourvue d'une paroi interne (2a) ;
- un ensemble (37) destiné à être solidaire de l'autre composant, comprenant au moins un corps roulant (4) disposé en rotation contre la paroi interne (2a) au moyen d'une pièce de positionnement (5), et une pièce de blocage (3) disposée à l'intérieur de la couronne (2), ladite pièce de blocage étant pourvue d'au moins une rampe (3a) en regard de laquelle au moins un corps roulant (4) est positionné, lesdites pièces de blocage (3) et de positionnement (5) étant associées de façon déplaçable en rotation relativement l'une par rapport à l'autre entre une position active dans laquelle les corps roulants (4) sont positionnés en contact avec la rampe (3a) de sorte à permettre la rotation relative de la couronne et de l'ensemble dans un sens (S2) mais pas dans l'autre (S1), et une position inactive dans laquelle les corps roulants (4) sont positionnés à distance de la rampe (3a) de sorte à permettre la libre rotation relative de la couronne (2) et de l'ensemble (37) dans les deux sens ; et
- un dispositif de déplacement (10) réversible en rotation relative des pièces de positionnement (5) et de blocage (3) entre les positions active et inactive.

2. Système selon la revendication 1, **caractérisé en ce que** le dispositif de déplacement (10) comprend en outre un moyen de contrainte élastique (7) de la rotation relative des pièces de positionnement (5) et de blocage (3).

3. Système selon la revendication 1 ou 2, **caractérisé en ce que** le corps roulant (4) est contraint, en position active dudit système, contre la rampe (3a) et la paroi interne (2a) au moyen d'un ressort (43) solidaire dudit corps roulant (4).

4. Système selon l'une quelconque des revendications 1 à 3, **caractérisé en ce que** le dispositif de déplacement (10) est agencé pour déplacer relativement les pièces de positionnement (5) et de blocage (3) en position inactive par positionnement des composants dans une première position angulaire extrême et en position active par positionnement desdits composants dans une deuxième position angulaire extrême.

5. Système selon la revendication 4, **caractérisé en ce que** le dispositif de déplacement (10) comprend :
- sur la face externe (5b) de la pièce de positionnement (5), un muret (5a) et un organe d'actionnement (6) mobile en rotation autour d'un axe (11), parallèle à l'axe (8) de rotation relative des composants, ledit organe étant pourvu de deux saillies (13a,13b) dont l'une (13a) est agencée pour, par appui sur ledit muret lors d'une rotation de l'organe dans un premier sens (s1), déplacer angulairement la pièce de positionnement par rapport à la pièce de blocage dans la position inactive ;
- un premier ergot (12a), disposé sur la paroi interne (2a) de la couronne (2), qui est apte, lorsque les composants sont dans une première position angulaire extrême, à induire la rotation de l'organe (6) dans le premier sens (s1 ) par appui dudit ergot sur la saillie (13a);
- un deuxième ergot (12b), disposés sur la paroi interne (2a) de la couronne (2), qui est apte, lorsque les composants sont dans la deuxième position angulaire extrême, à induire la rotation de l'organe (6) dans un deuxième sens (s2) par appui dudit ergot sur la saillie (13b) de sorte à positionner les pièces de positionnement et de blocage dans la position active.

6. Système selon la revendication 4, **caractérisé en ce que** le dispositif de déplacement comprend :
- un moyen d'ancrage temporaire (25) solidaire de la pièce de positionnement (5) ;
- un ergot (26) destiné à être solidaire du composant associé à l'ensemble (37), ledit ergot étant apte, lorsque les composants sont dans une première position extrême, à être solidarisé au moyen d'ancrage (25) de sorte à positionner les pièces de positionnement et de blocage en position inactive et, lorsque les composants sont dans la deuxième position extrême, à être désolidarisé du moyen d'ancrage par appui sur ledit moyen d'ancrage.

7. Système selon l'une quelconque des revendications 1 à 3, **caractérisé en ce que** le dispositif de déplacement (10) comprend un moyen d'actionnement manuel (31) susceptible d'être actionné à partir de toutes les positions angulaires de réglage.

8. Système selon la revendication 7, **caractérisé en ce que** le dispositif de déplacement (10) comprend en outre un organe de transmission d'effort (32) s'étendant entre le moyen d'actionnement (31) et une surface de came de la pièce de positionnement (5), ledit organe de transmission comprenant une rampe qui coopère avec ladite surface de came pour, lors de l'enfoncement du moyen d'actionnement, induire le positionnement des pièces de blocage et de positionnement dans la position inactive.

9. Siège de véhicule automobile comprenant un dossier et un accoudoir qui est monté en rotation sur ledit dossier par l'intermédiaire d'un système de réglage selon l'une quelconque des revendications 1 à 8, la couronne étant solidaire de l'accoudoir et l'ensemble (37) étant solidaire du dossier.

10. Siège de véhicule automobile selon la revendication 9, **caractérisé en ce que** l'accoudoir comprend un bouton (39), un câble (40) étant relié entre ledit bouton et la pièce de positionnement (5) du système de réglage (1), l'actionnement du bouton entraînant une tension du câble (40) qui provoque la rotation de la pièce de positionnement (5) par rapport à la pièce de blocage (3) de sorte à positionner le système (1) en position inactive.

11. Siège de véhicule automobile selon la revendication 9 ou 10, **caractérisé en ce que** le système de réglage (1) comprend un dispositif de blocage en position haute de l'accoudoir (38), ledit dispositif comprenant un ergot (44) et une lame ressort (45), ladite lame ressort (45) étant agencée pour se bloquer sur l'ergot (44) lorsque l'accoudoir est en position haute.

12. Appui tête pour véhicule automobile, comprenant une armature sur laquelle est monté en rotation un coussin par l'intermédiaire d'un système de réglage selon l'une quelconque des revendications 1 à 8, la couronne étant solidaire du coussin et l'ensemble étant solidaire de l'armature.
